# EUROPÄISCHE PATENTSCHRIFT

(11) **EP 1 728 046 B1**
(45) Veröffentlichungstag und Bekanntmachung des Hinweises auf die Patenterteilung: **21.07.2010**
(21) Anmeldenummer: 05759415.2
(22) Anmeldetag: 22.03.2005
(51) Int. Cl.: G01B 11/30

(54) **VORRICHTUNG UND VERFAHREN ZUM OPTISCHEN DETEKTIEREN EINES MATERIALAUFTRAGS**
DEVICE AND METHOD FOR THE OPTICAL DETECTION OF AN APPLICATION OF MATERIAL
PROCEDE ET DISPOSITIF POUR LA DETECTION OPTIQUE D'UNE APPLICATION DE MATERIAU

(30) Priorität: 24.03.2004 DE 102004014245
(43) Veröffentlichungstag der Anmeldung: 06.12.2006
(73) Patentinhaber: Held & Partner GbR, 75050 Gemmingen (DE)
(72) Erfinder: REIME, Gerd, 77815 Bühl (DE)
(74) Vertreter: Müller, Hans
(86) Internationale Anmeldenummer: PCT/EP2005/003036
(87) Internationale Veröffentlichungsnummer: WO 2005/093369

(56) Entgegenhaltungen:
- EP-A- 1 030 173
- WO-A-03/009476
- PATENT ABSTRACTS OF JAPAN Bd. 017, Nr. 519 (P-1615), 17. September 1993 (1993-09-17) & JP 05 135156 A (SUMITOMO METAL IND LTD), 1. Juni 1993 (1993-06-01)

## Beschreibung

### Gebiet der Erfindung

Die Erfindung betrifft eine Vorrichtung und ein Verfahren zum optischen Detektieren einer Oberfläche, wie z.B. beim zwei- oder dreidimensionalen Auftrag eines Materials auf einem Untergrund oder allgemein beim Detektieren von Erhebungen, Vertiefungen oder sonstiger optisch erfassbarer Oberflächendetails an einer Oberfläche nach dem Oberbegriff des Anspruchs 1 oder 19.

### Stand der Technik

Eine derartige Vorrichtung ist z.B. aus der DE 38 09 221 A1 bekannt und dient dort zum Feststellen von Fehlstellen vorzugsweise von Rissen und/oder Einschnürungen an Pressteilen oder anderen Werkstücken. Für diesen Zweck wird eine optische Abtastung vorgenommen, wobei die beleuchtete Oberfläche mit einer Kamera aufgenommen wird, deren Bild dann bildpunktweise mit einem Referenzbild verglichen wird. Dabei ermittelte Unterschiede werden als Unzulänglichkeiten ausgegeben. Dieses Verfahren ist allerdings schon allein auf Grund des Kameraeinsatzes recht aufwändig und erlaubt nicht immer eine Online-Prüfung bei einer taktzeitgesteuerten Serienfertigung. In der Nähe von Schweißrobotern kann es zudem zu einem Blenden der Kamera kommen.

Ein bevorzugter Einsatzbereich der Erfindung ist der Auftrag von Klebe- und Schweißraupen, also ein dreidimensionaler Auftrag, wenngleich das Verfahren auch zum zweidimensionalen Auftragen z.B. einer Farbschicht oder Klebeschicht oder zum Detektieren von optisch erfassbaren Oberflächendetails wie z.B. Bohrlöcher oder Markierungen geeignet ist und auch andere Einsatzzwecke möglich sind. Im Rahmen des Aufbringens eines Kunststoff- oder Klebstoffstrangs ist aus der DE 199 36 730 A1 eine Vorrichtung und ein Verfahren bekannt, das beispielsweise in der Automobilindustrie zum Versiegeln von Bördelnähten an Blechteilen bestimmt ist. Eine Roboteranordnung besitzt eine relativ zur Unterlage entlang einer vorgegebenen Bahn bewegbare Detektionsvorrichtung. Damit wird ein aushärtbarer flüssiger oder pastöser Kunststoff unter Druck aufgetragen, wobei zur blasenfreien Aushärtung eine UV-Lichtquelle parallel mitgeführt wird. Eine Qualitätsprüfung der ausgetretenen pastösen Masse auf Lage und/oder Breite des Materialauftrags erfolgt jedoch nicht.

Aus der europäischen Patentanmeldung EP 706 648 A1 ist ein optisches System zur Detektion einer Änderung in der Reflexion an einem Gegenstand bekannt, bei dem Fremdlichtänderungen keinen Einfluss auf den gemessenen Wert ausüben. Das dortige System wird im Wesentlichen als Scheibenwischersensor zur Erfassung der auf einer Windschutzscheibe auftreffenden Regentropfen verwendet, kann jedoch ebenso als Positionssensor benutzt werden. Werden dabei die optoelektronischen Messstrecken flächig aufgebaut, lassen sich zweidimensionale Werte für die Bestimmung der Position eines Objekts bestimmen. Eine , Fremdlichtkompensation wird dadurch erreicht, dass die aus getaktet betriebenen Strahlungsstrecken am Empfänger eingehenden Signale miteinander verglichen werden. Ein eventueller Differenzwert an der Photodiode wird zeitabhängig dadurch zu Null zurückgeregelt, dass die in die Strahlungsstrecken eingebrachte Strahlungsleistung nachgeregelt wird. In der EP 706 648 A1 werden nur dynamische Änderungen der Regelspannung ausgewertet.

WO-A-03 009 476 beschreibt eine Vorrichtung zur optischen Detektion der Position eines Objektes. Die Vorrichtung weist eine Sensoreinheit bestehend aus zwei Lichtquellen mit einem dazwischen liegenden Empfänger auf. Die Lichtquellen sind so getaktet, dass sie den Raum, in den sie einstrahlen, weitgehend gleichmässig ausleuchten. Abhängig von der Position des Objektes in dem Raum gelangen unterschiedliche Lichtintensitäten zum Empfänger, die zur Bestimmung der Position des Objektes in einer Dimension ausgewertet werden. Die Verwendung von zwei sich kreuzenden Sensoreinheiten mit gemeinsamen Empfänger in der Mitte erlaubt die Bestimmung der Position des Objektes in zwei Dimensionen.

### Offenbarung der Erfindung

Ausgehend von diesem Stand der Technik liegt der vorliegenden Erfindung die Aufgabe zu Grunde, eine Vorrichtung und ein Verfahren zu schaffen, die eine Überwachung der Anbringung oder Detektion von Erhebungen oder Vertiefungen auf kostengünstige Weise erlauben.

Diese Aufgabe wird durch eine Vorrichtung und ein Verfahren mit den Merkmalen des Anspruches 1 beziehungsweise des Anspruches 13 gelöst.

Durch den Einsatz einer Sensoreinheit, die aus mehreren Lichtquellen wie z. B. Leuchtdioden in Verbindung mit wenigstens einem Empfänger besteht, kann auf Grund der aus den verschiedenen Strahlungsstrecken anstehenden Positionsmesswerte auch mehrdimensional zumindest die Lage und Breite von Erhebungen oder Vertiefungen oder eines Auftrags bestimmt werden. Grundsätzlich lassen sich alle Arten von optisch erfassbaren Oberflächendetails detektieren wie z.B. Bohrlöcher oder Markierungen, an denen z.B. derartige Bohrlöcher angebracht werden sollen. Ein aufwendiges Kamerasystem mit entsprechenden Bearbeitungszeiten zur bildpunktweisen Überprüfung der erfassten Werte ist nicht erforderlich. Trotzdem lässt sich selbst ein dreidimensionaler schwarzer Auftrag auf schwarzen Untergrund erkennen. Damit wird eine Online-Dokumentation möglich, die den Anforderungen eines Qualitätsmanagements entspricht. Deutlich lässt sich bereits während des Anbringens erkennen, ob der Auftrag zufriedenstellend ausgeführt ist oder nicht.

Bedarfsweise kann eine dynamische Fremdlichtkompensation eingesetzt werden, die den erwünschten Nebeneffekt hat, dass trotz stark wechselnde Lichtverhältnisse z.B. in der Nähe von Schweißrobotern ein störungsfreier Betrieb möglich ist.

Die ermittelten Ergebnisse lassen sich noch dadurch steigern, dass mehrere Lichtquellen und Empfänger auf beiden Seiten der Detektionsvorrichtung zum Detektieren von optisch erfassbaren Oberflächendetails wie z.B. Bohrlöcher oder Markierungen angeordnet werden. Dadurch können einerseits die Werte links und rechts miteinander verglichen werden, es ist aber auch eine Interaktion zwischen den verschiedenen Lichtquellen auf einer Seite und dem oder den Empfängern auf der anderen Seite möglich, so dass diese Ergebnisse für eine weitere genauere Betrachtung benutzt werden können. Dadurch lassen sich insbesondere die Höhe und damit das Volumen des aufgetragenen Materials bestimmen.

Wird eine Sensoreinheit auf der Mittellinie oder über der Mitte der Erhebungen, Vertiefungen oder sonstigen Oberflächendetails angeordnet, ist es möglich, die Lage der Mitte zu bestimmen und auch nach Vergleich mit entsprechenden Sollwerten ihre Position gegebenenfalls nachzuregeln. Damit kann allerdings noch nicht die Lage der Flanken eines Materialauftrags beurteilt werden. Für die Flankenüberwachung auf Unebenheiten, Krümmung der Flanken und Asymmetrie können jedoch die beidseits der Mittellage angeordneten Strahlungsstrecken bzw. die aus diesen Strecken gewonnenen Werte der Kompensationsregelung zu Null herangezogen und zur Bestimmung der Lage und Position der Flanken miteinander verrechnet werden.

In einer bevorzugten Ausführungsform wird vor und nach der Detektionsvorrichtung eine Erfassung durchgeführt und die so ermittelten Werte werden voneinander abgezogen. Wird der von der Arbeitsgeschwindigkeit der Detektionsvorrichtung abhängige Zeitversatz entsprechend berücksichtigt, ergibt sich ein klares Differenzbild. Die ermittelte Differenz darf lediglich um einen festen Wert, der dem Anbringen der Erhebungen entspricht, voneinander abweichen. Diese Abweichung sollte unabhängig von der Oberfläche, auf die das Material aufgetragen wird, immer gleich bleibende Werte haben, so dass unter Einsatz eines Toleranzbandes zu große Abweichungen bestimmbar werden.

Die Anordnung kann entweder rotierbar angeordnet werden, so dass sie auch der Auftragsrichtung rotatorisch folgen kann, es ist aber ebenso möglich, zusätzlich Empfänger auch seitlich vorzusehen und durch entsprechende Verrechnungen verschiedener Strahlungsstrecken eine weitere Überwachung in beliebigen Koordinatenrichtungen zu ermöglichen.

Wird mit polarisiertem Licht bzw. mit entsprechenden Polarisationsfiltern gearbeitet, wird ein besseres Signal erhalten, da z.B. die Reflektion auf dem Untergrund verringert wird. Damit ist es möglich, die Rauhigkeit und damit die Oberflächenbeschaffenheit des Materialauftrages zu überwachen.

Weitere Vorteile ergeben sich aus den abhängigen Ansprüchen und der folgenden Beschreibung.

### Kurzbeschreibung der Figuren

Im folgenden wird die Erfindung anhand der beigefügten Figuren näher erläutert. Es zeigen:
- Fig. 1: ein beispielhaftes schematisches Schaltbild für eine Sensoreinheit,
- Fig. 2: die erfindungsgemäße Vorrichtung mit Empfängern und Lichtquellen beider- seits eines Materialauftrages,
- Fig. 3: eine Vorrichtung gemäß Fig. 2 mit einer weiteren mittig angeordneten Einheit aus Empfängern und Lichtquellen,
- Fig. 4: eine Vorrichtung mit nur einem mittigen Empfänger bei außermittiger Lage der Mitte des Materialauftrages,
- Fig. 5: eine Darstellung gemäß Fig. 4 mit einem mittigen Materialauftrag bei unter- schiedlichen Flankenkrümmungen,
- Fig. 6: eine Draufsicht auf eine Vorrichtung mit Sensoreinheiten vor und hinter der Detektionsvorrichtung,
- Fig. 6a: eine alternative Sensoreinheit gemäß Fig. 6,
- Fig. 7: ein vor der Detektionsvorrichtung von Fig. 6 ermitteltes Signal,
- Fig. 8: ein nach der Detektionsvorrichtung von Fig. 6 ermitteltes Signal,
- Fig. 9: das aus Fig. 7 und Fig. 8 ermittelte Differenzsignal.

### Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

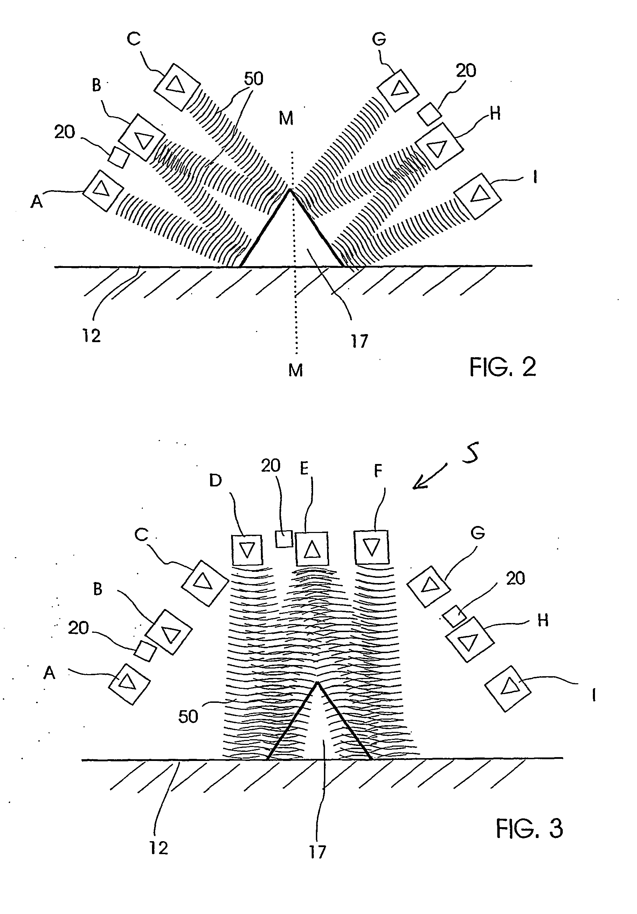

Die Vorrichtung gemäß den Figuren 2 bis 6 dient zum optischen Detektieren eines Materialauftrags oder von optisch erfassbaren Oberflächendetails wie z.B. Bohrlöcher oder Markierungen auf einer Oberfläche 12. Es handelt sich vorzugsweise um einen mehrdimensionalen Materialauftrag, d.h. es kann entweder z.B. eine Farb- oder Klebeschicht zweidimensional - auch dies sind im weitesten Sinne optisch erfassbare Veränderungen an der Oberfläche - oder eine Masse, wie z.B. eine pastöse Masse zum Kleberaupen- oder Schweißraupenauftrag dreidimensional auf die Oberfläche aufgetragen werden. Vertiefungen können z.B. bestehende oder optisch markierte, noch anzufahrende Bohrlöcher in einer Oberfläche sein. Um den Qualitätsanforderungen zu genügen, sollen derartige Erhebungen 17 oder Vertiefungen unabhängig davon, ob sie singulär wie Bohrlöcher oder punktförmige Aufträge oder kontinuierlich wie ein Klebestreifen aufgebracht werden, gleichmäßig mit entsprechender Güte und Qualität erfolgen. Hierzu muss die Vorrichtung die Oberfläche bzw. die Erhebungen, Vertiefungen oder optisch erfassbaren Oberflächendetails z.B. auf Unzulänglichkeiten überprüfen, die von vorgegebenen Sollwerten über ein zulässiges Toleranzband hinaus abweichen.

Für diese Überwachung ist wenigstens eine relativ zur Oberfläche des Untergrundes 12 bewegbare Sensoreinheit S vorgesehen. Diese Sensoreinheit besitzt mehrere Lichtquellen, die in den Figuren 2 bis 5 mit A, C, D, F, G, I bezeichnet sind. Im Ausführungsbeispiel jeweils zwischen zwei Lichtquellen ist wenigstens ein Empfänger B, E, H, vorgesehen, der zum Empfang des von den Lichtquellen ausgesandten Lichts nach Reflektion an der Oberfläche unter Bildung wenigstens einer Strahlungstrecke zwischen Lichtquelle und Empfänger vorgesehen ist. Der oder die Empfänger können aber grundsätzlich an jeder beliebigen Stelle angeordnet werden oder es kann auch ein Empfänger mehreren Lichtquellen zugeordnet sein, solange sicher gestellt ist, dass das Licht aus den Lichtquellen zum Empfänger gelangen kann. Mit anderen Worten bilden sich, wie z.B. in Figur 2 dargestellt, verschiedene Strahlungsstrecken 50 aus. So sendet z.B. die Lichtquelle A Licht aus, das vom Empfänger B empfangen wird, und wechselweise im Takt dazu sendet z.B. die Lichtquelle C Licht aus, das ebenfalls vom Empfänger B empfangen wird. Die vom Empfänger ermittelten Werte werden in Signale umgesetzt, die in einer Auswerteeinheit 11 zur Bestimmung der Erhebungen, Vertiefungen oder der sonstigen Oberflächendetails verwendet werden. Die Auswerteeinheit setzt dazu die vom Empfänger B, E, H für die Strahlungsstrecken 50 empfangenen Signale in Werte zur Erfassung der Erhebungen oder Vertiefungen oder auch Veränderungen durch Vergleich mit Referenzwerten um. Diese Werte ergeben sich aus den ermittelten Positionsabweichungen der Erhebungen oder Vertiefungen bzw. vorzugsweise aus dem Wert, der von der Sensoreinheit zur Kompensation der ermittelten Abweichung zu Null bestimmt wird.

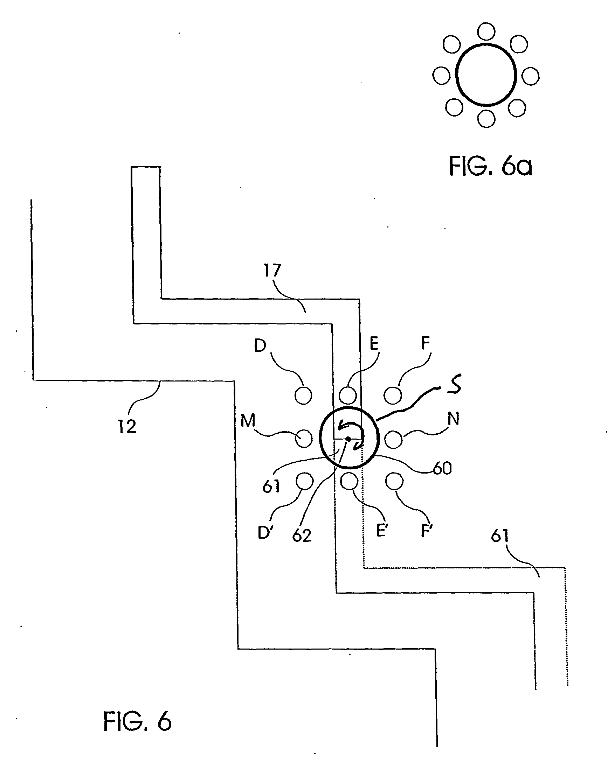

Die Sensoreinheit S ist gemeinsam mit der Detektionsvorrichtung 60 gemäß Fig. 6, aber auch in der vereinfachten Ausführungsform gemäß den Figuren 2 bis 5 gemeinsam mit dieser Detektionsvorrichtung bewegbar, zumindest ist sie ihr zugeordnet. Während die Detektionsvorrichtung zum Detektieren von Erhebungen 17 oder Vertiefungen z.B. einen mehrdimensionalen, also zwei- oder dreidimensionalen Auftrag des Materials auf der Oberfläche 12 vornimmt, wird von der Sensoreinheit erfasst, ob dieser Auftrag entsprechenden Gütevorstellungen genügt. Dazu werden die Lichtquellen A, C, D, F, G, I mittels einer Taktschaltung, die durch den Oszillator 10 getaktet wird, taktweise wirksam geschalten. Dadurch ergeben sich verschiedene Strahlungsstrecken 50. Wie im folgenden noch ausgeführt wird, kompensiert die Auswerteeinheit 11 zugleich aber auch Fremdlicht durch Regelung der Leistung der Lichtquellen mittels einer Regelschaltung, wobei die Kompensation über die in den Figuren 2 bis 5 dargestellten weiteren Lichtquellen 20 erfolgen kann, es ist aber durchaus möglich, eine der anderen Lichtquellen zur Kompensation einzusetzen.

Die Kompensation kann aber auch, wie in der älteren deutschen Patentanmeldung DE 103 00 223.5 beschrieben, dadurch erfolgen, dass die für die Regelung eingesetzte, wenigstens eine weitere Lichtquelle 20 eine von den anderen Lichtquellen unabhängige Lichtquelle ist, die dem Empfänger zugeordnet ist und die in ihrer Lichtintensität in Amplitude und Vorzeichen regelbar ist. Wenn eine Lichtquelle Licht aussendet, wird in einem Empfänger, der dieses Licht z.B. nach Reflexion erhält, ein taktsynchrones elektrisches Signal erzeugt. Sendet z.B. die Leuchtdiode Licht mit einer Taktfrequenz von 40 KHz aus, wird die Photodiode ein entsprechendes Signal mit der gleichen Frequenz und nahezu gleicher Phase erzeugen. Betrachtet man bei zwei getaktet betriebenen Leuchtdioden den hier relevanten Wechsellichtanteil bezüglich der Sendephase von 0°, so kann dieser Wechsellichtanteil positiv oder negativ sein, d.h. eine Phase von 0° oder 180° aufweisen, da eine Leuchtdiode bei einer Phase von 0° und die andere bei einer Phase von 180° abstrahlt. Dabei wird 0° mit positivem Vorzeichen identifiziert und 180° mit negativem Vorzeichen. Wird nun eine weitere Lichtquelle zugeschaltet, die unabhängig von den das Licht aussendenden Lichtquellen arbeitet, kann diese Licht in Amplitude und Vorzeichen vorzugsweise phasenversetzt einstrahlen. Mit anderen Worten kann also die weitere Lichtquelle durch zusätzliche Lichteinstrahlung die Kompensation im Wesentlichen oder sogar alleine übernehmen. Dadurch wird über die Lichtleistung der weiteren Lichtquelle das taktsynchrone Empfangssignal in seiner Amplitude so beeinflusst, dass das Empfangssignal zu Null wird.

Durch diese Kompensation steht an den Empfängern B, E, H jeweils ein Gleichlichtanteil ohne taktsynchronen Wechsellichtanteil an. Zur Bestimmung zumindest der Lage und Breite des Auftrages werden nun die aus den Strahlungsstrecken kommenden Signalwerte der Kompensationsregelung zu Null, also die Positionsmesswerte am Empfänger B, E, H oder der zur Kompensation erforderliche Signalwert miteinander verrechnet, um eine Istwerterfassung der angebrachten Erhebungen 17 oder Vertiefungen zu erhalten. Die Vorrichtung kann aber bedarfsweise auch ohne eine derartige Fremdlichtkompensation betrieben werden.

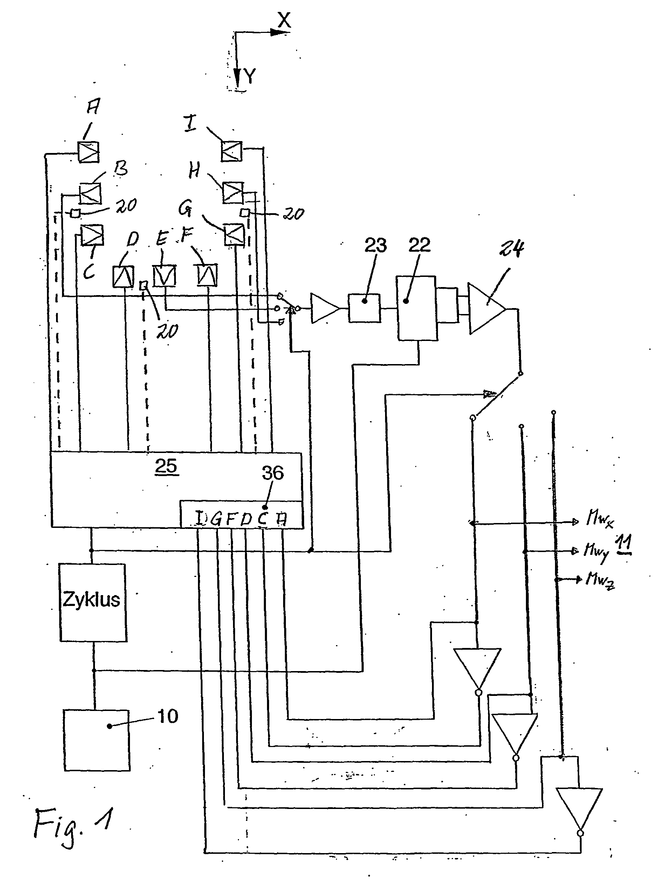

Die Schaltung der Sensoreinheit ist beispielhaft in Figur 1 erläutert.

Die Position z.B. eines Objekts auf einer gegebenen Oberfläche lässt sich am einfachsten durch wenigstens zwei getrennte Sensorelemente bestimmen. Ein Sensorelement bestimmt mit Lichtquellen die Position in x-Richtung, das andere Elemente mit Lichtquellen die Position in y-Richtung. Das folgende Ausführungsbeispiel beschreibt die Anbringung und Detektion eines kontinuierlichen Klebestreifenauftrags, diskontinuierliche Aufträge und ihre Detektion oder die Detektion von optisch erfassbaren Oberflächendetails wie z.B. Bohrlöcher oder Markierungen kann jedoch in analoger Weise erfasst werden. Für die vorliegende Ausführung genügt die Bestimmung in einer Koordinatenrichtung, da ein fortlaufender Materialauftrag in der zweiten Koordinatenrichtung erfolgt. Auf die dritte Dimension wird unten eingegangen. Die aus dem an den Erhebungen 17 und/oder an der Oberfläche 12 reflektierten Licht ermittelten Messwerte ergeben jeweils die Position des Materials.

Im Folgenden wird für eine mehrdimensionale Positionserfassung das Prinzip erläutert. Die Lichtquellen A,C,D,F,G,I sind z.B. LEDs, der Empfänger E ist z. B. eine Photodiode oder eine entsprechend beschaltete Leuchtdiode. Die Lichtquellen werden über eine Taktschaltung invertiert angesteuert. Sie werden dabei so in ihrer Leistung über Regelschaltungen geregelt, dass am ebenfalls über die Taktschaltung angesteuerten jeweiligen Empfänger B,E,H ein Gleichlichtanteil ohne taktsynchronen Wechselanteil ansteht. Die Taktschaltung besitzt einen Taktverteiler 25, der nicht nur die jeweiligen Lichtquellen und Empfänger, sondern zugleich auch die Leistungsregelungen 36 entsprechend ansteuert. Ist die Reflektion an den miteinander verglichenen Strahlungsstrecken gleich, steht am Ende des Vergleichers 24 ein Messwert von Null an, kommt es jedoch zu einer Asymmetrie des Auftrags, ergeben sich die entsprechenden Messwerte Mwₓ, Mw_{y} oder Mw_{z}. Im Gegensatz zur EP 706 648 A1 wird jedoch das Leistungsverhältnis der Sendeelemente nicht bewusst zeitverzögert, sondern so schnell wie möglich nachgeregelt. Dadurch wird eine sofortige Reaktion der Regelspannungskorrektur für die Sendeleistung der Lichtquellen bei einer Positionsänderung des Materials erreicht. Der über den Vergleicher 24 ermittelte Wert stellt den elektrischen Wert der mechanischen Position des Materials in x-Richtung dar. Das vom Empfänger E ermittelte Signal wird einem Hochpass 23 zugeführt und mittels eines Synchrondemodulators 22 und anschließendem Vergleichen im Vergleicher 24 taktweise verglichen. Daraus ergibt sich ein Wert für die Regelspannung, die den Regeleinheiten zugeführt wird, wodurch gewährleistet wird, dass das Signal am Empfänger zu Null wird.

Die Ansteuerung der weiteren Lichtquellen 20 wurde in Fig. 1 nur gestrichelt angedeutet, da durch die beschriebene Regelung der von den Lichtquellen ausgesandten Strahlung eine gesonderte Kompensation nicht erforderlich ist, die Kompensation, die jeweils dem Empfänger zugeordnet ist, kann jedoch wie in der älteren deutschen Patentanmeldung DE 103 00 223.5 bzw. wie oben beschrieben vorgenommen werden.

Ohne die Anwesenheit des die Erhebungen 17 bildenden Materials wird parasitäre Reflektion bei entsprechendem Aufbau ungefähr gleiche Anteile der Sendeleistung der getaktet betriebenen Lichtquellen A,C,D,F,G,I wechselseitig zum Empfänger B,E,H streuen. Dabei bleibt die Regelspannung nahezu unbeeinflusst, also bei Null. Bei asymmetrischem Auftrag versucht die Regelschleife die Lichtleistung so einzustellen, dass am Empfänger E wieder ein Gleichlichtsignal ohne Wechsellichtanteile ansteht. Dies führt zu einer Verschiebung der Regelspannungssymmetrie an den Regeleinheiten und somit auch zu einem Ausgangssignal am Vergleicher 24 je nach Position nach rechts oder links vom Mittelpunkt der mechanischen Anordnung. Das Ausgangssignal nimmt mehr oder weniger positive bzw. negative Werte gegenüber einer symmetrischen Leistungsansteuerung der Lichtquellen an.

Zur Erfassung der dritten Dimension ist bei flacher Anordnung der Fläche 12 die Position des Materials im Verhältnis zur Fläche 12 zu bestimmen. Geht man von einer nahezu flachen Anordnung der optischen Elemente aus, kann die Bestimmung der Position des Materials im Wesentlichen nur durch Reflexion erfolgen. Da zumindest aber die Reflexionseigenschaften des Materials die Messwerte beeinflussen, würden verschieden reflektierende Gegenstände in verschiedenen Abständen von der Fläche 12 gleiche Reflexionswerte ergeben, so dass eine genaue Positionsbestimmung in der dritten Dimension nicht eindeutig wäre. Grundsätzlich ist die Bestimmung einer Funktion der dritten Dimension sinnvoll, ausgehend von der mechanischen Ebene der Sensoreinheit, und diese Funktion sollte dann nahezu unabhängig von Größe, Farbe oder Art des Materials sein.

Zur Bestimmung der Positionserfassung in der dritten Dimension wird zu den beiden Taktzyklen zur Bestimmung des x-Wertes und ggf. des y-Wertes der Lage des Materials auf der Oberfläche 12 noch mindestens ein weiterer Taktzyklus hinzugefügt. In diesem Taktzyklus werden die Lichtquellen A,C,D,F,G,I so angesteuert, dass sie alle oder zumindest ein Teil davon das gleiche Taktsignal erhalten, also gleichzeitig leuchten. Hierbei ist es nicht erforderlich, dass sie einzeln geregelt werden, wie es zur Positionsbestimmung in x- und y-Richtung notwendig ist. Weiterhin kann eine weitere Lichtquelle 20 als Kompensationsmittel in der Nähe des oder der Empfänger E so angeordnet, dass das von dieser weiteren Lichtquelle abgestrahlte Licht nahezu ausschließlich in den oder die Empfänger einstrahlt. Spielt Fremdlicht keine Rolle, kann jedoch auf dieses Kompensationsmittel verzichtet werden. Ziel ist eine möglichst gleichmäßige Ausleuchtung des Raums oberhalb der Fläche 12.

In der einfachsten Ausführungsform sind lediglich gemäß Fig. 3 zwei Lichtquellen D, F und ein Empfänger E, also die mittig über der Erhebung 17 angeordnete Sensoreinheit S vorgesehen. Ergänzend kann bei einer Ausgestaltung nach der älteren deutschen Patentanmeldung DE 103 00 223.5 die weitere Lichtquelle 20 zur Kompensation vorhanden sein. Will man die Lage des Auftrages bestimmen, müssen die Signalwerte aus den Strahlungsstrecken 50 miteinander verrechnet werden.

Um die Breite bzw. Größe zu bestimmen, müssen die Werte aus den Strahlungsstrecken beider Lichtquellen D, F mit der Kompensation oder der weiteren Lichtquelle 20 ins Verhältnis gesetzt werden.

Vorzugsweise sind jedoch z. B. gemäß Fig. 2 um den Bearbeitungsbereich 61 herum zumindest beidseits einer Mittellinie m-m mehrere Lichtquellen und wenigstens je ein Empfänger B, H angeordnet. Bei dieser Version können Lage und Position der Flanken 19 überwacht werden. Bleibt die Erhebung - oder Vertiefung - vor allem bei einem dreidimensionalen Auftrag in der gewünschten mittigen Form sollten die Signale aus den Lichtstrecken 50, die von den Lichtquellen A und C am Empfänger B eingehen, gleich bleibend bei Null bleiben und die Signale von den Lichtquellen G und I, die am Empfänger H eingehen, ebenfalls Null bleiben. Kommt es zu einer Abweichung, regelt das System diese aus. Die Regelabweichung zeigt den Fehler an.

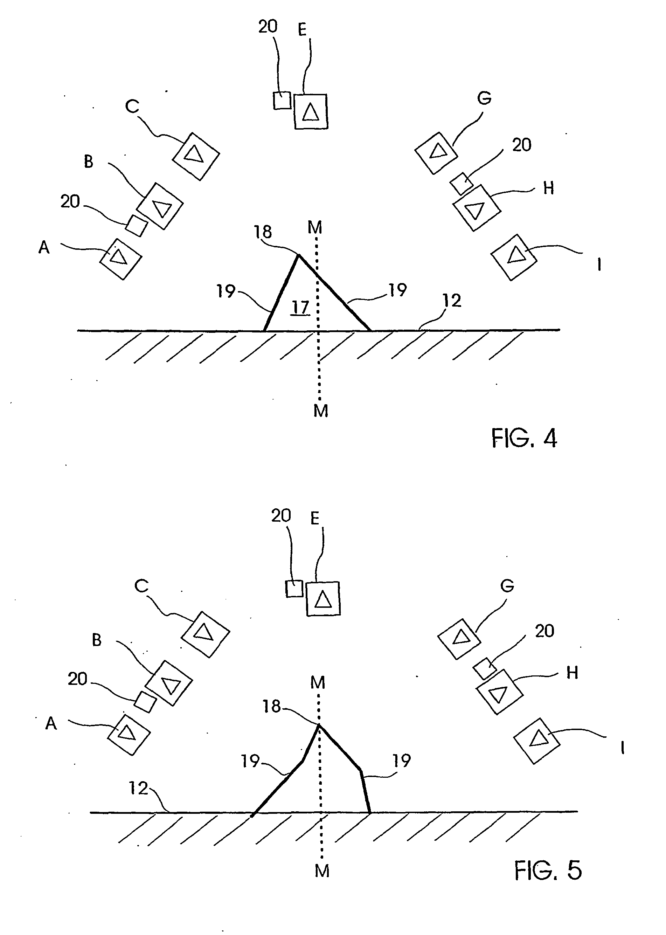

Damit kann noch nicht die Lage der Mitte 18 der Erhebung 17 festgestellt werden. Über der Mitte 18 sollte daher entweder ein Empfänger E allein (Fig. 4) oder aber ein Empfänger einer Sensoreinheit S (Fig. 3) vorzugsweise symmetrisch zur Mittellinie m-m des Bearbeitungsbereichs 61 angeordnet sein. Wird beidseitig, vorzugsweise symmetrisch zur Mittellinie m-m des Bearbeitungsbereichs 61 je eine Sensoreinheit S vorgesehen, können die Signalwerte der Kompensationsregelung zu Null von beiden Seiten miteinander verglichen werden. Diese Sensoreinheiten sind wie in den Figuren vorzugsweise so angeordnet, dass sie etwa in einem Winkel zur Oberfläche 12 angeordnet sind, der dem Winkel der Flanke 19 des aufgetragenen Materials 17 zur Oberfläche 12 entspricht. Zumindest sollte aber eine Sensoreinheit links und eine rechts vom Mittelbereich der Erhebung 17 angeordnet sein, so dass die Messstrecken den Mittelbereich überbrücken. Denkbar ist auch auf beiden Seiten mit in gleichem Maße asymmetrischen, aber z.B. spiegelsymmetrisch zueinander verlaufenden Strahlungsstrecken und damit Anordnungen der Lichtquellen und Empfänger zu arbeiten.

Grundsätzlich besteht das Ziel, die Flanken auf Unebenheiten zu überwachen, die Mittenlage zu bestimmen und Krümmung und Asymmetrie der Erhebungen, Vertiefungen oder Oberflächendetails zu detektieren, wobei gegenüber einem Sollzustand Toleranzbereiche durchaus zulässig sind. Werden diese Toleranzbereiche jedoch überschritten, sollte die Vorrichtung ein Signal abgeben, das z.B. eine Qualitätsüberwachung des herzustellenden Auftrages erlaubt, oder selbsttätig den gewünschten Sollzustand nachregeln. Hierzu können auch verschiedene Empfänger und Lichtquellen auf beiden Seiten und auch über der Erhebung 17 hinsichtlich des Aussendens des Lichts und des Empfangens des Lichts miteinander gekoppelt sein. Lichtquellen und Empfänger können auch aus verschiedenen Sensoreinheiten stammen, um z.B. Strahlungsstrecken zu bilden, die von der Lichtquelle A zum Empfänger H oder von der Lichtquelle I zum Empfänger B laufen.

Bei den Lichtquellen handelt es sich grundsätzlich um Leuchtdioden und auch die Empfänger können als Empfänger angeschlossene Leuchtdioden sein. So kann aufgrund des Halbleitermaterials der Leuchtdioden jeder Empfänger gleichzeitig eine Lichtquelle sein und umgekehrt. Kommt es zu einer Krümmung der Flanken 19 gemäß Fig. 5 wird dies durch einen Unterschied im Wert der Signale auf beiden Seiten der Erhebung 17 deutlich.

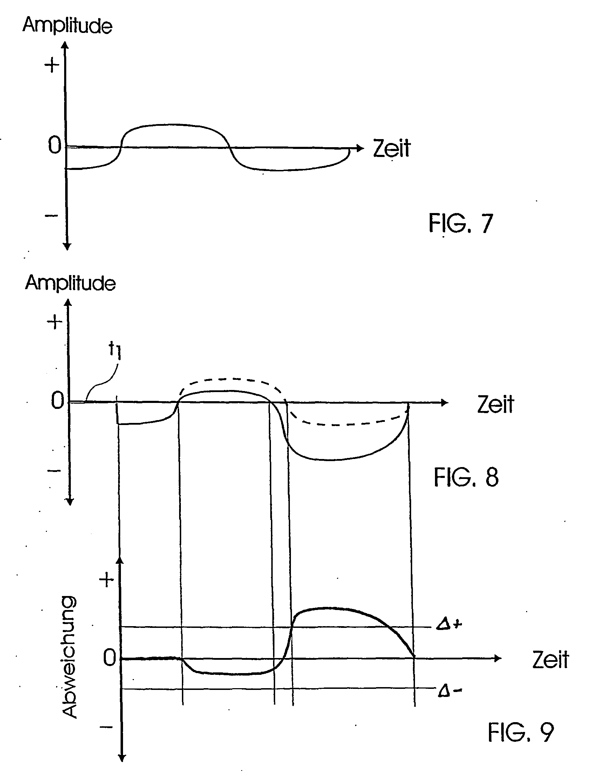

Eine verbesserte Überwachungsmöglichkeit lässt sich in einer Version gemäß den Figuren 6, 6a und 7 erreichen. Die Vorrichtung weist wenigstens je eine Sensoreneinheit in Arbeitsrichtung der Detektionsvorrichtung 60 vor und hinter der Detektionsvorrichtung auf. Dies wird in Figur 6 dadurch verdeutlicht, das im Bereich des aufgetragenen Materials im oberen Bereich die Lichtquellen D, F mit dem Empfänger E zusammenarbeiten, während vor dem Auftrag, also im unteren Bereich die Lichtquellen D', F' mit dem Empfänger E' zusammenarbeiten. Gemäß Figur 7 ergibt sich damit beim ersten Überfahren des Bearbeitungsbereichs 61 mit den Lichtquellen D', F' und Empfänger E' z.B. ein Signalverlauf gemäß Figur 7. Um die Zeit t₁ versetzt liefert die Sensoreinheit aus den Lichtquellen D, F und dem Empfänger E ein Signal gemäß Figur 8. Diese beiden Signale sollten sich eigentlich nur dadurch unterscheiden, dass hinter der Detektionsvorrichtung 60 jetzt die Erhebung 17 aufgebracht ist. Das um die Zeit t₁ versetzte Signal des ersten Überfahrens ist zum Vergleich in Fig. 8 gestrichelt eingetragen. Diese Differenz sollte gleichmäßig sein. Wird nun jedoch eine Differenz gemäß Figur 9 aus den beiden Verläufen gebildet, in der die Verzögerung der Zeit t₁ herausgerechnet wird, lässt sich feststellen, ob eine konstante Differenz gegebenenfalls mit einem Toleranzband eingehalten wird oder überschritten wird.

Eine derartige Vorrichtung kann, wie in Figur 6 dargestellt, um eine vorzugsweise im rechten Winkel zur Fläche 12 stehende Achse 62 drehbar angeordnet sein, es besteht aber auch die Möglichkeit, diese Vorrichtung noch weiter zu optimieren. Unabhängig von der Drehbarkeit können nämlich zwischen der vorderen Sensoreinheit (Lichtquellen D', F' und Empfänger E') und der hinteren Sensoreinheit (Lichtquellen D, F, und Empfänger E) weitere Lichtquellen und/oder Empfänger vorgesehen sein, die im Ausführungsbeispiel durch zwei Empfänger M, N gebildet sind. Dadurch lassen sich wiederum Sensoreinheiten bilden, die in einer anderen Koordinatenrichtung Werte liefern. Zum Beispiel können die Lichtquellen D, F Strahlungsstrecken im Hinblick auf den Empfänger E bilden, während die Lichtquellen F und F' Strahlungsstrecken im Hinblick auf dem Empfänger N bilden. Damit lässt sich eine mehrdimensionale Überwachung erreichen, die auch über die Diagonalen, also z.B. von D und F' erfolgen kann. Eine Drehbarkeit ist dann nicht mehr erforderlich. Dies lässt sich dahin gehend optimieren, dass die Lichtquellen und Empfänger z.B. im Kreis angeordnet sind, so dass eventuelle unterschiedliche Abstände zur vorzugsweise mittig angeordneten Detektionsvorrichtung nicht mehr ins Gewicht fallen.

In beiden Fällen kann eine Messung reihum erfolgen, wobei die Halbleiterelemente wechselweise als Lichtquelle oder Empfänger beschaltet werden.

Die über einen Differenzwertbildner gebildete Differenz der Werte vor und hinter der Detektionsvorrichtung kann gleichzeitig zur Nachführung der Detektionsvorrichtung 60 und des Auftrags an Material verwendet werden.

Vorzugsweise strahlen die Lichtquellen infolge von Polarisationsfiltern polarisiertes Licht aus, um z.B. Reflektionen auf dem Untergrund zu vermeiden. Dadurch lässt sich das aufgetragene Material noch deutlicher vom Untergrund unterscheiden. Durch den Einsatz von Polarisationsfiltern kann die Rauhigkeit und damit die Oberflächenbeschaffenheit des aufgetragenen Materials besser überwacht werden.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 10: Oszillator
- 11: Auswerteeinrichtung
- 12: Oberfläche
- 17: Material
- 18: Mitte
- 19: Flanke
- 20: weitere Lichtquelle zur Kompensation
- 22: Synchrondemodulator
- 23: Hochpass
- 24: Vergleicher
- 25: Taktverteiler
- A,C,D,F,G,I,: Lichtquelle
- D',F': Lichtquelle
- B,E,E',H: Empfänger
- 50: Strahlungsstrecke
- 60: Detektionsvorrichtung
- 61: Bearbeitungsbereich
- 62: Achse
- Mwₓ: Messwert x
- Mw_{y}: Messwert y
- S, S': Sensoreinheit

## Patentansprüche

1. Vorrichtung zum optischen Detektieren eines Materialauftrags (17) auf einer Oberfläche (12) mit
einer ersten Sensoreinheit bestehend aus zwei Lichtquellen (A,C; D,F; G,I) mit dazwischen liegendem Empfänger (B; E; H) zum Empfang des von den Lichtquellen (A,C; D,F; G,I) ausgesandten Lichts nach der Reflektion an der Oberfläche (12) unter Bildung von wenigstens zwei Strahlungsstrecken (50) zwischen Lichtquellen (A,C; D,F; G,I) und Empfänger (B; E; H), wobei die beiden Lichtquellen (A,C; D,F; G,I) wechselweise im Takt Licht aussenden;
einer zweiten Sensoreinheit bestehend aus zwei Lichtquellen (A,C; D,F; G,I) mit dazwischen liegendem Empfänger (B; E; H), zum Empfang des von den Lichtquellen (A,C; D,F; G,I) ausgesandten Lichts nach der Reflektion an der Oberfläche (12) unter Bildung von wenigstens zwei Strahlungsstrecken (50) zwischen Lichtquellen (A,C; D,F; G,I) und Empfänger (B; E; H), wobei die beiden Lichtquellen (A,C; D,F; G,I) wechselweise im Takt Licht aussenden, wobei bei der Verwendung der Vorrichtung, diese relativ zur Oberfläche so bewegt wird, dass die beiden Sensoreinheiten beidseits einer Mittellinie des Materialauftrags (17) angeordnet sind;
mit einer Auswerteeinheit (11), die die von den Empfängern (B; E; H) für die Strahlungsstrecken (50) empfangenen Signale in Werte zur Erfassung der Oberfläche durch Vergleich mit Referenzwerten umsetzt;
und mit Rechenmitteln, die die aus den verschiedenen Strahlungsstrecken kommenden Signalwerte miteinander zur Ermittlung der Lage, Grösse und gegebenenfalls der Form von Oberflächendetails verrechnen.

2. Vorrichtung nach Anspruch 1, wobei in der Auswerteeinheit (11) zur Kompensation der Leistung der Lichtquellen eine Regelschaltung vorgesehen ist, so dass infolge der Kompensation an den Empfängern (B; E; H) ein Gleichlichtanteil ohne taktsynchronen Wechsellichtanteil ansteht.

3. Vorrichtung nach Anspruch 1 oder 2, wobei bei der Verwendung der Vorrichtung die erste und zweite Sensoreinheit symmetrisch zur Mittellinie des Materialauftrags (17) angeordnet sind.

4. Vorrichtung nach einem der Ansprüche 1 bis 3, wobei bei der Verwendung der Vorrichtung die erste und zweite Sensoreinheit in einem Winkel zur Oberfläche (12) angeordnet sind, der dem Winkel der Flanke (19) des Materialauftrags (17) zur Oberfläche (12) entspricht.

5. Vorrichtung nach einem der Ansprüche 1 bis 4, mit einer dritten Sensoreinheit bestehend aus zwei Lichtquellen (A,C; D,F; G,I) mit dazwischen liegendem Empfänger (B; E; H) zum Empfang des von den Lichtquellen (A,C; D,F; G,I) ausgesandten Lichts nach der Reflektion an der Oberfläche (12) unter Bildung von wenigstens zwei Strahlungsstrecken (50) zwischen Lichtquellen (A,C; D,F; G,I) und Empfänger (B; E; H), wobei die beiden Lichtquellen (A,C; D,F; G,I) wechselweise im Takt Licht aussenden, deren Empfänger (B; E; H) bei der Verwendung der Vorrichtung symmetrisch zur Mittellinie des Materialauftrags (17) angeordnet ist.

6. Vorrichtung nach einem der Ansprüche 1 bis 4, mit einem dritten Empfänger (E), der bei der Verwendung der Vorrichtung symmetrisch zur Mittellinie des Materialauftrags (17) angeordnet ist.

7. Vorrichtung nach einem der Ansprüche 1 bis 6, wobei die Strahlungsstrecken (50) zwischen Lichtquellen (A,C; D,F; G,I) und Empfänger (B; E; H) aus verschiedenen Sensoreinheiten gebildet sind.

8. Vorrichtung nach einem der Ansprüche 1 bis 4, wobei vier Lichtquellen (D, F, D', F') an den Ecken eines Rechtecks angeordnet sind, und die Empfänger (E, E', M, N) zwischen den Lichtquellen (D, F, D', F') angeordnet sind.

9. Vorrichtung nach Anspruch 8, wobei bei der Verwendung der Vorrichtung in Bewegungsrichtung vor und hinter dem Materialauftrag eine Sensoreinheit gebildet ist.

10. Vorrichtung nach Anspruch 8 oder 9, wobei die Lichtquellen (D, F, D', F') und die Empfänger (E, E', M, N) um eine Achse (62) drehbar angeordnet sind.

11. Vorrichtung nach Anspruch 9, wobei ein Differenzbildner vorgesehen ist, der eine Differenz aus den Werten vor und hinter dem Materialauftrag bestimmt, und die so ermittelte Differenz zur Auswertung verwendet.

12. Vorrichtung nach einem der vorangehenden Ansprüche, wobei das Licht der Lichtquellen (A,C; D,F; G,I) polarisiert ist.

13. Verfahren zum optischen Detektieren eines Materialauftrags (17) auf einer Oberfläche (12) mit folgenden Verfahrensschritten:
Vorsehen einer ersten Sensoreinheit bestehend aus zwei Lichtquellen (A,C; D,F; G,I) mit dazwischen liegendem Empfänger (B; E; H) zum Empfang des von den Lichtquellen (A,C; D,F; G,I) ausgesandten Lichts nach der Reflektion an der Oberfläche (12) unter Bildung von wenigstens zwei Strahlungsstrecken (50) zwischen Lichtquellen (A,C; D,F; G,I) und Empfänger (B; E; H), wobei die beiden Lichtquellen (A,C; D,F; G,I) wechselweise im Takt Licht aussenden;
Vorsehen einer zweiten Sensoreinheit bestehend aus zwei Lichtquellen (A,C; D,F;
G,I) mit dazwischen liegendem Empfänger (B; E; H), zum Empfang des von den Lichtquellen (A,C; D,F; G,I) ausgesandten Lichts nach der Reflektion an der Oberfläche (12) unter Bildung von wenigstens zwei Strahlungsstrecken (50) zwischen Lichtquellen (A,C; D,F; G,I) und Empfänger (B; E; H), wobei die beiden Lichtquellen (A,C; D,F; G,I) wechselweise im Takt Licht aussenden,
Bewegen der ersten und zweiten Sensoreeinheit relativ zur Oberfläche so, dass die beiden Sensoreinheiten beidseits einer Mittellinie des Materialauftrags (17) angeordnet sind;
Umsetzen der von den Empfängern (B; E; H) für die Strahlungsstrecken (50) empfangenen Signale in Werte zur Erfassung der Oberfläche durch Vergleich mit Referenzwerten mittels einer Auswerteeinheit (11); und
Verrechnen der aus den verschiedenen Strahlungsstrecken kommenden Signalwerte miteinander zur Ermittlung der Lage, Grösse und gegebenenfalls der Form von Oberflächendetails mittels Rechenmitteln.

14. Verfahren nach Anspruch 13, wobei die Auswerteeinheit (11) die Leistung der Lichtquellen (A,C; D,F; G,I) mittels einer Regelschaltung so kompensiert, dass an den Empfängern (B; E; H) ein Gleichlichtanteil ohne taktsynchronen Wechsellichtanteil ansteht.

15. Verfahren nach Anspruch 13 oder 14, wobei die erste und zweite Sensoreinheit symmetrisch zur Mittellinie des Materialauftrags (17) angeordnet werden.

16. Verfahren nach einem der Ansprüche 14 bis 15, wobei die erste und zweite Sensoreinheit in einem Winkel zur Oberfläche (12) angeordnet werden, der dem Winkel der Flanke (19) des Materialauftrags (17) zur Oberfläche (12) entspricht.

17. Verfahren nach einem der Ansprüche 13 bis 16, mit Vorsehen einer dritten Sensoreinheit bestehend aus zwei Lichtquellen (A,C; D,F; G,I) mit dazwischen liegendem Empfänger (B; E; H) zum Empfang des von den Lichtquellen (A,C; D,F; G,I) ausgesandten Lichts nach der Reflektion an der Oberfläche (12) unter Bildung von wenigstens zwei Strahlungsstrecken (50) zwischen Lichtquellen (A,C; D,F; G,I) und Empfänger (B; E; H), wobei die beiden Lichtquellen (A,C; D,F; G,I) wechselweise im Takt Licht aussenden, deren Empfänger (B; E; H) symmetrisch zur Mittellinie des Materialauftrags (17) angeordnet wird.

18. Verfahren nach einem der Ansprüche 13 bis 16, wobei ein dritter Empfänger (E) symmetrisch zur Mittellinie des Materialauftrags (17) angeordnet wird.

19. Verfahren nach einem der Ansprüche 13 bis 18, wobei die Strahlungsstrecken (50) zwischen Lichtquellen (A,C; D,F; G,I) und Empfänger (B; E; H) aus verschiedenen Sensoreinheiten gebildet werden.

20. Verfahren nach einem der Ansprüche 13 bis 16, wobei vier Lichtquellen (D, F, D', F') an den Ecken eines Rechtecks angeordnet werden, und die Empfänger (E, E', M, N) zwischen den Lichtquellen (D, F, D', F') angeordnet werden.

21. Verfahren nach Anspruch 20, wobei in Bewegungsrichtung vor und hinter dem Materialauftrag (17) eine Sensoreinheit gebildet wird.

22. Verfahren nach Anspruch 20 oder 21, wobei die Lichtquellen (D, F, D', F') und die Empfänger (E, E', M, N) um eine Achse (62) drehbar angeordnet werden.

23. Verfahren nach Anspruch 21, wobei eine Differenz aus den Werten vor und hinter dem Materialauftrag (17) bestimmt wird und die so ermittelte Differenz zur Auswertung verwendet wird.

24. Verfahren nach einem der Ansprüche 13 bis 23, wobei die Lichtquellen (A,C; D,F; G,I) polarisiertes Licht aussenden.

## Claims

1. Apparatus for optically detecting a material deposit (17) on a surface (12), comprising
a first sensor unit consisting of two light sources (A, C; D, F; G, I) with a receiver (B; E; H), which is arranged therebetween, for receiving the light emitted by the light sources (A, C; D, F; G, I) after reflection at the surface (12), with the formation of at least two radiation paths (50) between light sources (A, C; D, F; G, I) and receiver (B; E; H), wherein the two light sources (A, C; D, F; G, I) emit light alternately in a clocked fashion;
a second sensor unit consisting of two light sources (A, C; D, F; G, I) with a receiver (B; E; H), which is arranged therebetween, for receiving the light emitted by the light sources (A, C; D, F; G, I) after reflection at the surface (12), with the formation of at least two radiation paths (50) between light sources (A, C; D, F; G, I) and receiver (B; E; H), wherein the two light sources (A, C; D, F; G, I) emit light alternately in a clocked fashion, wherein, while the apparatus is in use, said apparatus is moved relative to the surface such that the two sensor units are arranged on both sides of a central line of the material deposit (17);
comprising an evaluation unit (11) which converts the signals received by the receivers (B; E; H) for the radiation paths (50) into values for the detection of the surface by comparison with reference values;
and comprising computing means which carry out a calculation using the signal values from the various radiation paths in order to ascertain the position, size and, if appropriate, the shape of surface details.

2. Apparatus according to Claim 1, wherein a control circuit is provided in the evaluation unit (11) for compensating the output of the light sources, so that, as a result of said compensation, a constant light component, without synchronously clocked alternating light component is present at the receivers (B; E; H).

3. Apparatus according to Claim 1 or 2, wherein, when the apparatus is in use, the first and second sensor units are arranged symmetrically with respect to the central line of the material deposit (17).

4. Apparatus according to one of Claims 1 to 3, wherein, when the apparatus is in use, the first and second sensor units are arranged at an angle to the surface (12) which corresponds to the angle of the flank (19) of the material deposit (17) to the surface (12).

5. Apparatus according to one of Claims 1 to 4, having a third sensor unit consisting of two light sources (A, C; D, F; G, I) with a receiver (B; E; H), which is arranged therebetween, for receiving the light emitted by the light sources (A, C; D, F; G, I) after reflection at the surface (12), with the formation of at least two radiation paths (50) between light sources (A, C; D, F; G, I) and receiver (B; E; H), wherein the two light sources (A, C; D, F; G, I) emit light alternately in a clocked fashion, the receiver (B; E; H) of which, when the apparatus is in use, is arranged symmetrically with respect to the central line of the material deposit (17).

6. Apparatus according to one of Claims 1 to 4, having a third receiver (E) which, when the apparatus is in use, is arranged symmetrically with respect to the central line of the material deposit (17).

7. Apparatus according to one of Claims 1 to 6, wherein the radiation paths (50) between light sources (A, C; D, F; G, I) and receiver (B; E; H) are formed by different sensor units.

8. Apparatus according to one of Claims 1 to 4, wherein four light sources (D, F, D', F') are arranged at the corners of a rectangle, and the receivers (E, E', M, N) are arranged between the light sources (D, F, D', F').

9. Apparatus according to Claim 8, wherein, when the apparatus is in use, a sensor unit is formed upstream and downstream of the material deposit in the direction of movement.

10. Apparatus according to Claim 8 or 9, wherein the light sources (D, F, D', F') and the receivers (E, E', M, N) are arranged such that they can rotate about an axis (62).

11. Apparatus according to Claim 9, wherein a subtractor is provided which determines a difference on the basis of the values upstream and downstream of the material deposit and uses the thus ascertained difference for evaluation purposes.

12. Apparatus according to one of the preceding claims, wherein the light from the light sources (A, C; D, F; G, I) is polarized.

13. Method for optically detecting a material deposit (17) on a surface (12), having the following method steps:
providing a first sensor unit consisting of two light sources (A, C; D, F; G, I) with a receiver (B; E; H), which is arranged therebetween, for receiving the light emitted by the light sources (A, C; D, F; G, I) after reflection at the surface (12), with the formation of at least two radiation paths (50) between light sources (A, C; D, F; G, I) and receiver (B; E; H), wherein the two light sources (A, C; D, F; G, I) emit light alternately in a clocked fashion;
providing a second sensor unit consisting of two light sources (A, C; D, F; G, I) with a receiver (B; E; H), which is arranged therebetween, for receiving the light emitted by the light sources (A, C; D, F; G, I) after reflection at the surface (12), with the formation of at least two radiation paths (50) between light sources (A, C; D, F; G, I) and receiver (B; E; H), wherein the two light sources (A, C; D, F; G, I) emit light alternately in a clocked fashion,
moving the first and second sensor units relative to the surface such that the two sensor units are arranged on both sides of a central line of the material deposit (17);
converting the signals received by the receivers (B; E; H) for the radiation paths (50) into values for the detection of the surface by comparison with reference values by means of an evaluation unit (11); and
carrying out a calculation using the signal values from the various radiation paths in order to ascertain the position, size and, if appropriate, the shape of surface details by means of computing means.

14. Method according to Claim 13, wherein a control circuit is used by the evaluation unit (11) to compensate the output of the light sources (A, C; D, F; G, I) so that a constant light component, without synchronously clocked alternating light component is present at the receivers (B; E; H).

15. Method according to Claim 13 or 14, wherein the first and second sensor units are arranged symmetrically with respect to the central line of the material deposit (17).

16. Method according to one of Claims 14 to 15, wherein the first and second sensor units are arranged at an angle to the surface (12) which corresponds to the angle of the flank (19) of the material deposit (17) to the surface (12).

17. Method according to one of Claims 13 to 16, with the provision of a third sensor unit consisting of two light sources (A, C; D, F; G, I) with a receiver (B; E; H), which is arranged therebetween, for receiving the light emitted by the light sources (A, C; D, F; G, I) after reflection at the surface (12), with the formation of at least two radiation paths (50) between light sources (A, C; D, F; G, I) and receiver (B; E; H), wherein the two light sources (A, C; D, F; G, I) emit light alternately in a clocked fashion, the receiver (B; E; H) of which is arranged symmetrically with respect to the central line of the material deposit (17).

18. Method according to one of Claims 13 to 16, wherein a third receiver (E) is arranged symmetrically with respect to the central line of the material deposit (17).

19. Method according to one of Claims 13 to 18, wherein the radiation paths (50) between light sources (A, C; D, F; G, I) and receiver (B; E; H) are formed by different sensor units.

20. Method according to one of Claims 13 to 16, wherein four light sources (D, F, D', F') are arranged at the corners of a rectangle, and the receivers (E, E', M, N) are arranged between the light sources (D, F, D', F').

21. Method according to Claim 20, wherein a sensor unit is formed upstream and downstream of the material deposit (17) in the direction of movement.

22. Method according to Claim 20 or 21, wherein the light sources (D, F, D', F') and the receivers (E, E', M, N) are arranged such that they can rotate about an axis (62).

23. Method according to Claim 21, wherein a difference is determined on the basis of the values upstream and downstream of the material deposit (17) and the thus ascertained difference is used for evaluation purposes.

24. Method according to one of Claims 13 to 23, wherein the light sources (A, C; D, F; G, I) emit polarized light.

## Revendications

1. Dispositif de détection optique d'une application de matière (17) sur une surface (12) comprenant
une première unité de détection composée de deux sources de lumière (A, C ; D, F ; G, I) avec un récepteur (B ; E ; H) situé entre elles pour la réception de la lumière émise par les sources de lumière (A, C ; D, F ; G, I) après la réflexion sur la surface (12) avec formation d'au moins deux parcours de rayonnement (50) entre sources de lumière (A, C ; D, F ; G, I) et récepteur (B ; E ; H), les deux sources de lumière (A, C ; D, F ; G, I) émettant de la lumière alternativement en cadence ;
une deuxième unité de détection composée de deux sources de lumière (A, C ; D, F ; G, I) avec un récepteur (B ; E ; H) situé entre elles pour la réception de la lumière émise par les sources de lumière (A, C ; D, F ; G, I) après la réflexion sur la surface (12) avec formation d'au moins deux parcours de rayonnement (50) entre sources de lumière (A, C ; D, F ; G, I) et récepteur (B ; E ; H), les deux sources de lumière (A, C ; D, F ; G, I) émettant de la lumière alternativement en cadence, le dispositif étant, lors de son utilisation, déplacé par rapport à la surface de manière que les deux unités de détection soient disposées des deux côtés d'une ligne médiane de l'application de matière (17) ;
une unité d'évaluation (11) qui convertit les signaux reçus des récepteurs (B ; E ; H) pour les parcours de rayonnement (50) en valeurs de détection de la surface par comparaison avec des valeurs de référence ;
et des moyens de calcul qui combinent entre elles les valeurs des signaux venant des différents parcours de rayonnement pour déterminer la position, la taille et, le cas échéant, la forme de détails de la surface.

2. Dispositif selon la revendication 1, dans lequel un circuit de régulation pour compenser la puissance des sources de lumière est prévu dans l'unité d'évaluation (11), de sorte qu'à la suite de la compensation une composante de lumière continue sans composante de lumière alternative synchrone soit présente aux récepteurs (B ; E;H).

3. Dispositif selon la revendication 1, dans lequel, lors de l'utilisation du dispositif, les première et deuxième unités de détection sont disposées symétriquement par rapport à la ligne médiane de l'application de matière (17).

4. Dispositif selon une des revendications 1 à 3, dans lequel, lors de l'utilisation du dispositif, les première et deuxième unités de détection sont disposées par rapport à la surface (12) suivant un angle qui correspond à l'angle du flanc (19) de l'application de matière (17) par rapport à la surface (12).

5. Dispositif selon une des revendications 1 à 4, comprenant une troisième unité de détection composée de deux sources de lumière (A, C ; D, F ; G, I) avec un récepteur (B ; E ; H) situé entre elles pour la réception de la lumière émise par les sources de lumière (A, C ; D, F ; G, I) après la réflexion sur la surface (12) avec formation d'au moins deux parcours de rayonnement (50) entre sources de lumière (A, C ; D, F ; G, I) et récepteur (B ; E ; H), les deux sources de lumière (A, C ; D, F ; G, I) émettant de la lumière alternativement en cadence, dont le récepteur (B ; E ; H) est disposé symétriquement par rapport à la ligne médiane de l'application de matière (17) lors de l'utilisation du dispositif.

6. Dispositif selon une des revendications 1 à 4, comprenant un troisième récepteur (E) qui est disposé symétriquement par rapport à la ligne médiane de l'application de matière (17) lors de l'utilisation du dispositif.

7. Dispositif selon une des revendications 1 à 6, dans lequel les parcours de rayonnement (50) entre sources de lumière (A, C ; D, F ; G, I) et récepteur (B ; E ; H) sont formés à partir de différentes unités de détection.

8. Dispositif selon une des revendications 1 à 4, dans lequel quatre sources de lumière (D, F, D', F') sont disposées aux angles d'un rectangle et les récepteurs (E, E', M, N) sont disposés entre les sources de lumière (D, F, D', F').

9. Dispositif selon la revendication 8, dans lequel, lors de l'utilisation du dispositif, une unité de détection est formée avant et après l'application de matière dans le sens de déplacement.

10. Dispositif selon la revendication 8 ou 9, dans lequel les sources de lumière (D, F, D', F') et les récepteurs (E, E', M, N) sont disposés à rotation autour d'un axe (62).

11. Dispositif selon la revendication 9, dans lequel il est prévu un formateur de différence qui détermine une différence à partir des valeurs avant et après l'application de matière et utilise la différence ainsi déterminée pour l'évaluation.

12. Dispositif selon une des revendications précédentes, dans lequel la lumière des sources de lumière (A, C ; D, F ; G, I) est polarisée.

13. Procédé de détection optique d'une application de matière (17) sur une surface (12) comprenant les étapes suivantes :
prévision d'une première unité de détection composée de deux sources de lumière (A, C ; D, F ; G, I) avec un récepteur (B ; E ; H) situé entre elles pour la réception de la lumière émise par les sources de lumière (A, C ; D, F ; G, I) après la réflexion sur la surface (12) avec formation d'au moins deux parcours de rayonnement (50) entre sources de lumière (A, C ; D, F ; G, I) et récepteur (B ; E ; H), les deux sources de lumière (A, C ; D, F ; G, I) émettant de la lumière alternativement en cadence ;
prévision d'une deuxième unité de détection composée de deux sources de lumière (A, C ; D, F ; G, I) avec un récepteur (B ; E ; H) situé entre elles pour la réception de la lumière émise par les sources de lumière (A, C ; D, F ; G, I) après la réflexion sur la surface (12) avec formation d'au moins deux parcours de rayonnement (50) entre sources de lumière (A, C ; D, F ; G, I) et récepteur (B ; E ; H), les deux sources de lumière (A, C ; D, F ; G, I) émettant de la lumière alternativement en cadence ;
déplacement des première et deuxième unités de détection par rapport à la surface de manière que les deux unités de détection soient disposées des deux côtés d'une ligne médiane de l'application de matière (17) ;
conversion des signaux reçus des récepteurs (B ; E ; H) pour les parcours de rayonnement (50) en valeurs de détection de la surface par comparaison avec des valeurs de référence au moyen d'une unité d'évaluation (11) ; et
combinaison entre elles des valeurs des signaux venant des différents parcours de rayonnement pour déterminer la position, la taille et, le cas échéant, la forme de détails de la surface au moyen de moyens de calcul.

14. Procédé selon la revendication 13, dans lequel l'unité d'évaluation (11) compense la puissance des sources de lumière (A, C ; D, F ; G, I) au moyen d'un circuit de régulation de sorte qu'une composante de lumière continue sans composante de lumière alternative synchrone soit présente aux récepteurs (B ; E ; H).

15. Procédé selon la revendication 13 ou 14, dans lequel les première et deuxième unités de détection sont disposées symétriquement par rapport à la ligne médiane de l'application de matière (17).

16. Procédé selon une des revendications 14 à 15, dans lequel les première et deuxième unités de détection sont disposées par rapport à la surface (12) suivant un angle qui correspond à l'angle du flanc (19) de l'application de matière (17) par rapport à la surface (12).

17. Procédé selon une des revendications 13 à 16, dans lequel est prévue une troisième unité de détection composée de deux sources de lumière (A, C ; D, F ; G, I) avec un récepteur (B ; E ; H) situé entre elles pour la réception de la lumière émise par les sources de lumière (A, C ; D, F ; G, I) après la réflexion sur la surface (12) avec formation d'au moins deux parcours de rayonnement (50) entre sources de lumière (A, C ; D, F ; G, I) et récepteur (B ; E ; H), les deux sources de lumière (A, C ; D, F ; G, I) émettant de la lumière alternativement en cadence, dont le récepteur (B ; E ; H) est disposé symétriquement par rapport à la ligne médiane de l'application de matière (17).

18. Procédé selon une des revendications 13 à 16, dans lequel un troisième récepteur (E) est disposé symétriquement par rapport à la ligne médiane de l'application de matière (17).

19. Procédé selon une des revendications 13 à 18, dans lequel les parcours de rayonnement (50) entre sources de lumière (A, C ; D, F ; G, I) et récepteur (B ; E ; H) sont formés à partir de différentes unités de détection.

20. Procédé selon une des revendications 13 à 16, dans lequel quatre sources de lumière (D, F, D', F') sont disposées aux angles d'un rectangle et les récepteurs (E, E', M, N) sont disposés entre les sources de lumière (D, F, D', F').

21. Procédé selon la revendication 20, dans lequel une unité de détection est formée avant et après l'application de matière (17) dans le sens de déplacement.

22. Procédé selon la revendication 20 ou 21, dans lequel les sources de lumière (D, F, D', F') et les récepteurs (E, E', M, N) sont disposés à rotation autour d'un axe (62).

23. Procédé selon la revendication 21, dans lequel une différence est déterminée à partir des valeurs avant et après l'application de matière (17) et la différence ainsi déterminée est utilisée pour l'évaluation.

24. Procédé selon une des revendications 13 à 23, dans lequel les sources de lumière (A, C ; D, F ; G, I) émettent une lumière polarisée.
